# EUROPEAN PATENT SPECIFICATION

(11) **EP 2 279 668 B1**
(45) Date of publication and mention of the grant of the patent: **16.07.2014**
(21) Application number: 09009813.8
(22) Date of filing: 29.07.2009
(51) Int. Cl.: A23G 3/02, A23G 3/12, A23G 3/00, B30B 11/12

(54) **Candy moulding machine**
Süßigkeitsformmaschine
Machine de moulage de confiserie

(43) Date of publication of application: 02.02.2011
(73) Proprietor: GEA Food Solutions Weert B.V., 6006 RV Weert (NL)
(72) Inventor: Asma, Frinus S.J., 5503 CM Veldhoven (NL)
(74) Representative: Wolff, Felix

(56) References cited:
- EP-A1- 0 501 574
- CH-A- 229 180
- DE-A1-102005 018 077
- US-A- 1 272 073
- US-A- 3 014 240
- US-A- 4 212 609

## Description

The present invention relates to a machine for producing candy from a mass of sugar bar or similar material, comprising:
- a rotatable die-ring having an axis of rotation and a number of circumferentially spaced, radially extending press chambers,
- supply means for feeding a bar into the press chambers
- shear-means at each press chamber for cutting off pieces off the bar of material,
- a pair of inner- and outer stamps per press chamber for pressing, the piece into the desired shape, whereas at least the inner stamp is displaceable during pressing and the inner stamp is driven by a pressure curve.

Such machines are for example known from the European patent EP 0 501 574 B1or US 3 014 240. These machines comprise a rotating die-ring, in which a number of the circumferentially spaced radially extending chamber press chambers are located. Supply means feed a bar, for example a sugar bar, or similar material towards these pressure chamber, were pieces are cut from the bar and placed into the pressing chamber. A pair of inner and outer stamps per chamber then presses the piece into the desired shape. Since not all pieces are identical, the forming pressure was therefore in many cases either too high or too low.

It was therefore the objective of the present invention to provide a machine, which adjusts the pressure based on the size of the piece to be formed.

This problem is solved with machine according to claim 1.

The inventive machine is suitable to mould candies from a mass of a sugar bar or similar material. This machine comprises a rotating die-ring, which has an axis of rotation and a number of circumferentially spaced radially extending press chambers. This rotatable die-ring preferably rotates with 40 to 100, more preferably 50 to 80 rpm. Depending on the number of press chambers in the die-ring, the inventive machine is capable of producing 1.000 lollipops per minute or more. The sugar bar is supplied to the inventive machine by supply means, for example two rolls, which feed the bar, preferably intimately, into the press chamber. Shear means, which are preferably located at each chamber cut the piece to be formed in the individual chamber off the bar of material.

Subsequently a pair of inner and outer stamps, which are located at each press chamber press the piece of sugar bar into the desired shape. The stamps are supported at the die-ring. The outer stamp is preferably pivotable around a centre of rotation located at the die ring. The inner stamp is preferably mounted axially displaceably. Preferably, the inner stamp is displaced during the pressing of the piece, while the outer stamp preferably only functions as a counter bearing, which is preferably stationary during the pressing operation.

The motion of the inner stamp is, according to the present invention, driven by a pressure curve. Since the inner stamp is attached to the die ring, it co-rotates with the die-ring. During this rotation, the inner stamps are at least temporarily in contact with the pressing curve and displaced axially by the pressure curve. Preferably, the stamp are connected to a rod, whereas the stamp is on one side of the rod and a roll is on the other side of the rod. This roll rolls along the pressure curve, so that the rod and thus the stamp are displaced.

According to the present invention, this pressure curve comprises at least two parts, which are adjustable individually. Due to the split of the pressure curve, it is possible to produce well shaped candies, even though the pieces cut from the sugar bar are not identical.

Preferably, each part of the pressure curve is attached to an arm, respectively. More preferably at least one, preferably both arms are pivotable around a centre of rotation, respectively, whereas these centres of rotation of each arm are at different locations.

Preferably, the pressure curves are pre-tensioned towards the die-ring, whereas each curve comprises separate tensioning- means, for example springs, which pretension the individual parts of the pressure curve towards the die-ring. Thus, the pressure curve is self adjusting, based on the seize of the piece to be formed.

According to the present invention, the curve comprises a pressure reduction zone. In this pressure reduction zone a stick is inserted into the cut off piece. This preferred embodiment of the present invention is primarily needed when lollipops are produced on the inventive machine.

According to another embodiment or a preferred embodiment of the present invention, the machine comprises a stationary outer ring, which is located coaxially to the die-ring but comprises a larger diameter.

Preferably, this outer ring comprises a pressure zone. This pressure zone either holds the outer stamp in place or even moves the outer stamp axially towards the inner stamp. Preferably, this pressure zone comprises a multitude of rolls. These rolls are in contact with the outer stamp and/or a lid of the pressing chamber to which the outer stamp is attached. Preferably, the pressure zone comprises a multitude of rolls, which are arranged in rows, whereas, more preferably, several rows of rolls are arranged in parallel. Preferably the rolls of two adjacent rows are staggered. Due to the rolls, the wear at the outer stamps and/or the lid is reduced.

In an other preferred embodiment of the present invention, the outer ring further comprises an opening zone in which the lid and/or the outer stamp are displaced, preferably pivoted away from the press chamber in order to remove the candy, for example the lollipop, from the inventive machine. This opening zone comprises a three-dimensional shaped curve, which opens the lid and holds the lid into the open position, while the individual press chamber rotates along this part of the outer ring.

The invention will be now further illustrated herein after on the basis of the drawings indicating by way of example, a machine for making lollipops. These explanations do not limit the scope of protection.

In the drawing:
Figure 1 shows a schematic side view of the die-ring for tongue-shaped lollipops and a supply means shown 90° turned;
Figure 2 shows a schematic view of the die-ring according to the bent line II-II of figure 1;
Figures 3 to 6 show cross-sections at a smaller scale according to the lines III-III to VI-VI of figure 1 so as to elucidate various stages of the lollipop-making process; and
figures 7 and 8 show at the same scale as figures 1 and 2 two alternatives of the machine for making round and oval lollipops, respectively;
Figure 9 shows the inventive pressing curve;
Figure 10 shows the outer ring;
Figure 11 shows the three dimensionally shaped curve.

The machine which is schematically indicated in the drawings is used for shearing pieces of sugar 1 from a sugar bar 2, which pieces of sugar being subsequently pressed to a confectionary lollipop. The machine substantially consists of a supply means which is provide with two forward rollers 4 and 5, a die-ring 6 having shear blades 7 and pairs of outer stamps 8 and inner stamps 9.

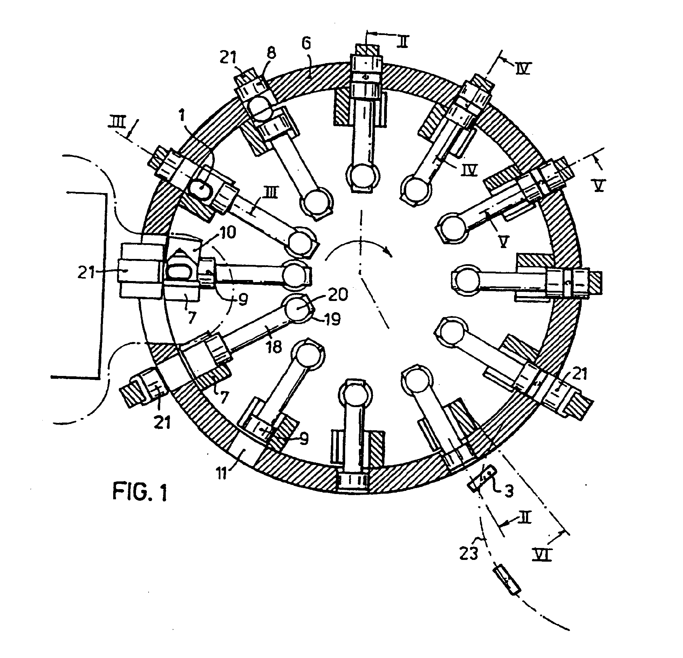

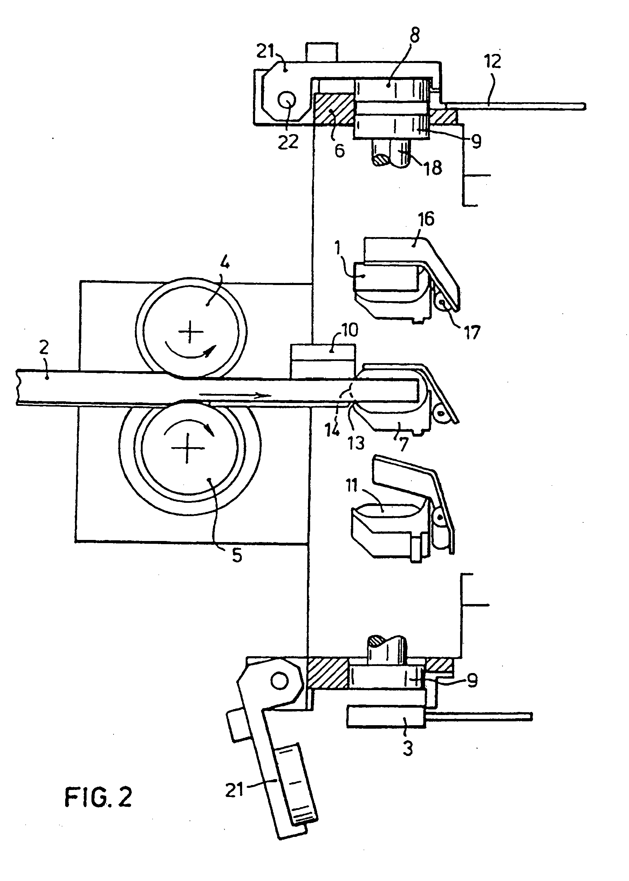

A fixed blade 10 is mounted between the forward rollers 4 and 5 and the largest path which is described by the shear blades 7 applied in the die-ring 6. These shear-blades7 have an appearance adapted to the appearance of the press rooms 11, in which the pressing stamps 8 and 9 can move in such a manner that the lower stamps 9 may pass the shear-blades 7. In the example shown in figures 1 and 2 twelve shear-blades 7 having a tongue shaped cavity have been mounted on the die-ring so as to let the lower stamps 9 pass. A stick can be applied in a manner not specified further in order to complete the lollipop.

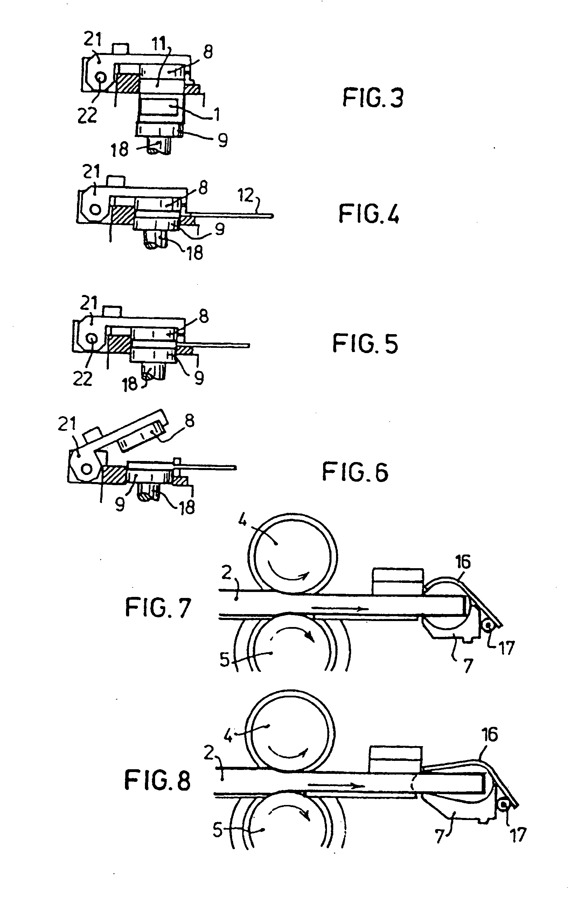

From figure 2 it appears that the shearing edge 13 of the shear-blades 7 is at the rear side with respect to the descriptive end 14 of the press room passing the supply means 4, 5 nearest. This is necessary with this embodiment, otherwise the point would become too sharp. However, there also are many other profiles of the press rooms and corresponding pressing stamps, and thus shear-blades 7 possible: Figure 7 is thereby intended for producing so-called "round" lollipops, and figure 8 for producing "oval" lollipops.

The forward rollers 4 and 5 turn intermittingly round in the rotation direction of the arrows. The parts 7 and 10 are shown as the shear blades of the sugar-strand-shearing-device. As soon as shear 7 has rotated past the horizontal centre line of figure 1 for some degrees, and thereby shearing a piece of the sugar bar in the direction, the forward rolls 4 and 5 move the sugar bar in the direction reciprocal the direction of rotation of said rolls. This forward movement is stopped before the next shear-blade 7 can cut off a sugar piece 1 from the sugar bar 2. Cutting off a sugar piece from the sugar bar takes place between the moving shear-blades 7 and the fixed blade 10.

In order to prevent the cut sugar piece 1 from ejecting a flap 16 is provided. Just like the shear-blade 7 this flap 16 has a cross-section corresponding with the press rooms 11. The flap 16 may rotate about a centre of rotation 17 and is usually "open", except, of course, during the time the sugar bar 2 is cut off.

The sugar piece 1 cut off from the sugar bar 2 is picked up by the shear-blade 7 and the flap 16 prevents if from ejecting. Because of the movements of the pressing stamps 8, 9 the sugar piece 1 is subsequently pressed to the desired lollipop model 3.

The lower stamps 9 are each provided on a rod 18 which at its other end is provided with a pressure roll 19 which may exercise a central compressive force on the rod 18 and therewith the lower stamp 9. Reposition is effected by a return roll 20 positioned outside the rod. The paths for controlling the rolls 19 and 20 have for clarity's sake been omitted in the drawing.

The upper stamps 8 are each mounted on a lid 21 which may pivot about a centre of rotation 22. The five lower lids 21 are open in figure 1. As a result a completed lollipop 3 can be submitted to a removing disc 23 which in figure 1 is schematically indicated by a dot and clash circle. In the bent part a lid 21 can be seen also.

The lids 21 are closed at those areas where necessary for the production process by a solid guide path, not shown.

The lollipop 3 obtains the shape of the press room 11 which is formed by the side walls of the press room and the head sides of the stamps 8 and 9. During the rotary movements of the die-ring 6 the stick 12 of the lollipop is also fed to the die-ring 6 in axial direction so as to be inserted into the lollipop.

Once the lollipop 3 is completed, the stamps 8 and 9 move into the position of figure 6 to bring the lollipop outside the press room.

For completeness' sake it is remarked that the candy to be produced by the invented machine may have all possible cross-sections, including a square cross-section.

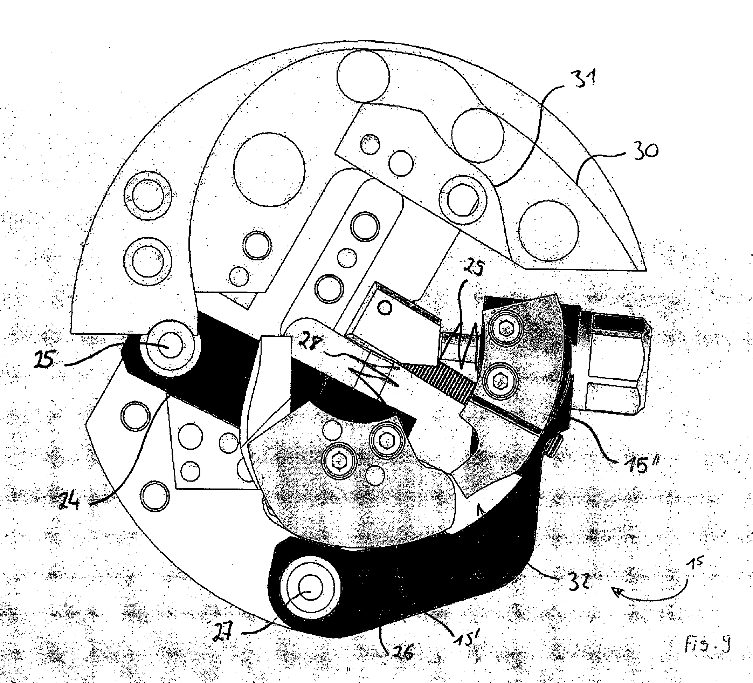

Figure 9 shows the pressing curve 15 and its bearing. The pressing curve comprises of a first part 15', which is attached to an arm, which is pivotable around a centre of rotation 25, which itself is stationary. This arm 24 is pre-tensioned by a spring 28 towards the die-ring 6. The second part of the pressing curve 15" is attached to a second arm 26, which is preferably L-shaped and which is rotatable around a centre of rotation 27, which is also stationary. This arm is also pre-tensioned towards the die-ring 6 by a spring 29. The outward movement of the arms 24, 26 is preferably limited. While the die ring 6 is turning, the pressure rolls 19 roll along the pressure curve 15, so that the rods 18 and the inner stamps 9 are displaced. The pressure curve 15 preferably comprises a pressure reduction zone 32, which is more preferably located between the two parts 15', 15" of the pressure curve, more preferably extends in the end zone of part 15' and in the entry-zone of part 15". In this pressure reduction zone 32, the pressure on the piece to be formed is reduced in order to, for example, insert a stick into the candy bar material in the die 11. After the stick has been inserted, the pressure is increased again in order to utilize a good connection between the candy bar and the stick and/or to give the cut off piece its final shape. Furthermore, the inventive machine comprises an ejecting curve, which co-acts with the return roll 20. This ejecting curve moves the inner stamp further into or beyond the press chambers 11 of the die-ring in order to remove the candies without a stick and/or excess candy bar material from the press chambers 11. The inventive machine further comprises an opening curve 30 which also co-acts with the return rolls 20 of the inner stamp and pushes the stamp well away from the pressing chamber, to provide space for the shear means 7, 10.

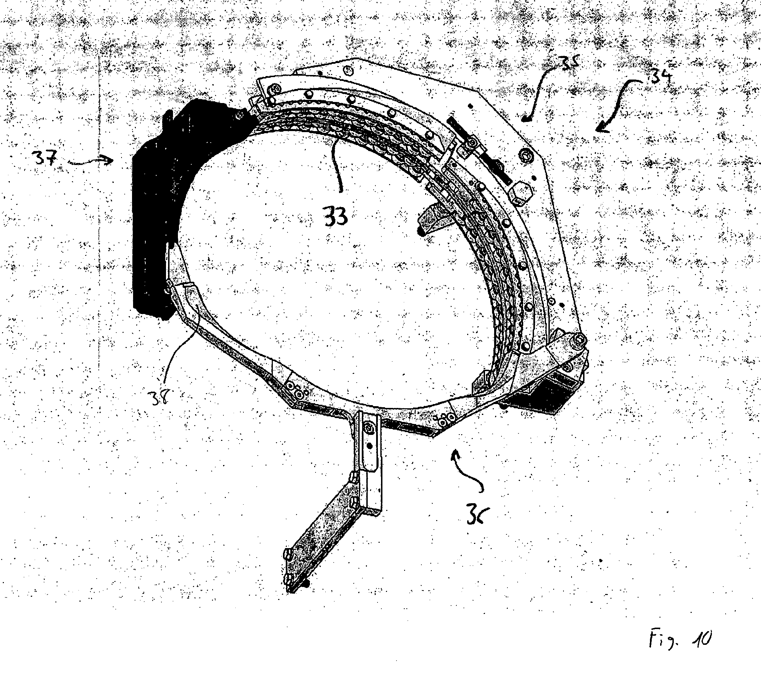

Figure 10 shows the outer ring 34, which is stationary. This outer ring comprises a pressing zone, which has a multitude of rolls 33, which are arrayed along a line, whereas the pressing zone 34 comprises in the present example four lines which are arranged in parallel. The rolls of two adjacent lines are staggered, to assure, that the outer stamp and/or the lid are always in contact with one preferably two rolls. This pressing chamber either holds in place or moves lid 21 towards the inner stamp, after the lid has been closed in the closing zone 37. The outer stamp is attached to or part of lid 21. This lid 21 rolls along the rolls 33. Due to these rolls, the friction between the lid 21 and the outer ring 35 is tremendously reduced, so that the wear of the lid is also significantly reduced. The lid is preferably made of metal and/or comprises an inlay which is made of a metal.

Furthermore, the outer ring comprises an opening zone 36, which opens the lid in order to remove the candy from the press chamber and/or in order to clean the press chamber. This opening zone 36 is utilized as a three dimensional shaped curved, which is according to the present invention milled from a piece of metal and consequently very stable and very precisely formed.

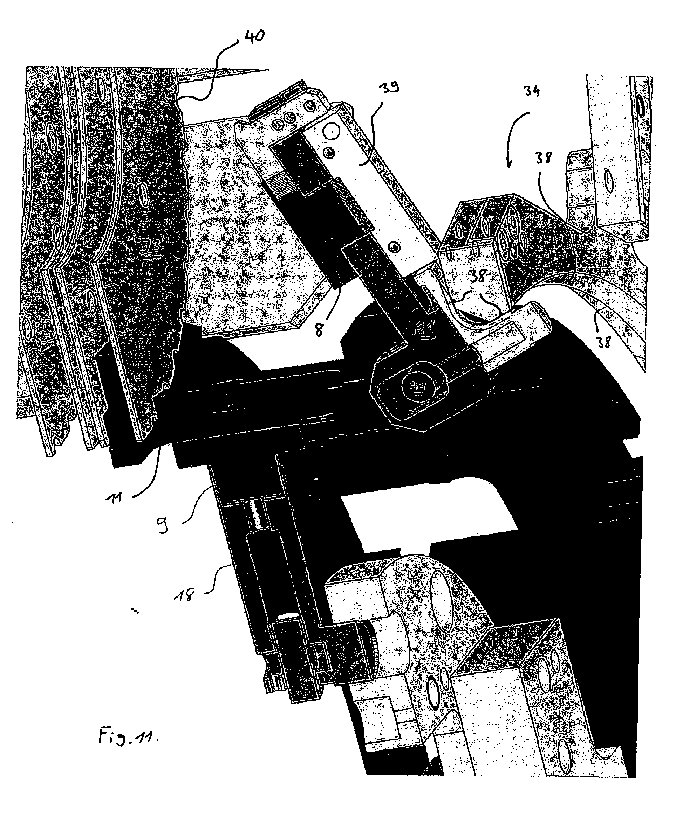

Figure 11 shows the opening zone of the outer ring 34. As can be seen, the lid 21 to which stamp 8 is attached, has already been opened, so that the lollipop can be removed from the chamber 11 and transported away by wheel 23, which has grooves 40 for the stick of the lollipop at its circumference. The lip 21 has its surface opposite of the stamp 8 a metal inlay 39, which comes into contact with the rolls 33 in the pressure zone 35 of ring 34. The lid 21 is opened by the three dimensionally shaped curve 38 in the opening zone 36. This curve 38 has preferably two opposite surfaces, which are in contact with the lid 21, while it rotates along this zone. The two surfaces fix the lid in a certain position alter the position of the lid 21, which is pivotable around the center of rotation 41. The part comprising the three dimensionally shaped curve 38 is milled out of a metal part and thus the motion of the lid 21 is very precise and the part comprising the curve 38 is very stable.

### List of reference signs:

- 1: cut pieces
- 2: bar of material
- 3: lollipop
- 4: supply means
- 5: supply means
- 6: die ring
- 7: shear means, shear blades
- 8: outer pressing stamp
- 9: inner pressing stamp
- 10: shear means, shear blade
- 11: press chambers
- 12: stick
- 13: shearing edge
- 14: descriptive end
- 15: pressing curve
- 15': first part of the pressing curve
- 15": second part of the pressing curve
- 16: flap
- 17: center of rotation
- 18: rod
- 19: pressure roll
- 20: return roll
- 21: lid
- 22: center of rotation
- 23: removing disk
- 24: first arm
- 25: center of rotation
- 26: second arm
- 27: center of rotation
- 28: spring
- 29: spring
- 30: opening curve
- 31: ejecting curve
- 32: pressure reduction zone
- 33: rolls
- 34: outer ring
- 35: pressure zone
- 36: opening zone
- 37: filling and closing zone
- 38: three dimensional shaped curve
- 39: inlay
- 40: grooves to hold the stick
- 41: center of rotation

## Claims

1. Machine for producing candy from a mass (2) of sugar bar or similar material, comprising:
- a rotatable die-ring (6) having an axis of rotation and a number of circumferentially spaced, radially extending press chambers (11),
- supply means (4, 5) for feeding a bar (2) into the press chambers (11)
- shear-means (7, 10) at each press chamber (11) for cutting off pieces (1) off the bar of material,
- a pair of inner- and outer stamps (9, 8) per press chamber for pressing the piece into the desired shape, whereas at least the inner stamp (9) is displaceable during pressing and the inner stamp (9) is driven by a pressure curve (15),
**characterized in, that** the pressure curve (15) comprises two parts (15', 15"), which are adjustable individually and that the curve (15) comprises a pressure reduction zone (32), in which a stick is inserted into the cut off piece.

2. Machine according to claim 1, **characterized in, that** the each part of the pressure curve (15', 15") is attached to an arm (24, 25), respectively,

3. Machine according to claim 2, **characterized in that** at least one arm, preferably both arms (24, 25) are pivotable around a center of rotation (25, 27), respectively.

4. Machine according to one of claims 2 or 3, **characterized in, that** at least one part of the pressure curve (15', 15") is pre-tensioned towards the die-ring (6).

5. Machine according to one of the preceding claims, **characterized in, that** the pressure curve (15) is self-adjusting.

6. Machine according to one of the preceding claims, **characterized in, that** it comprises a stationary outer ring (34).

7. Machine according to claim 6, **characterized in, that** the outer ring comprises a pressure zone (35), whereas, at least in this pressure zone (35) rolls (33) are located.

8. Machine according to one of the preceding claims, **characterized in, that** the outer stamp (8) is attached to a lid (21).

9. Machine according to claim 8, **characterized in, that** the lid (21) is rolling up along the rolls (33) during the rotation of the die-ring (6).

10. Machine according to claims 6 - 9, **characterized in, that** the outer ring further comprises an opening zone (36), which opens the lid (21), whereas the opening zone is a three-dimensionally shaped curve, which is a milled piece of metal.

## Patentansprüche

1. Maschine zur Herstellung von Süßigkeiten aus einer Zuckerstangenmasse (2) oder ähnlichem Material, umfassend:
- einen drehbaren Formring (6) mit einer Drehachse und mehreren umfangsmäßig beabstandeten, sich radial erstreckenden Drückräumen (11),
- Zuführmittel (4, 5) zum Zuführen einer Stange (2) in die Drückräume (11),
- Schermittel (7, 10) an jedem Drückraum (11) zum Abschneiden von Stücken (1) vom Stangenmaterial,
- ein Paar innerer und äußerer Drückstempel (9, 8) pro Drückraum, um das Stück in die gewünschte Gestalt zu drücken, während mindestens der innere Drückstempel (9) während des Drückens verschiebbar ist und der innere Drückstempel (9) durch einen Druckbogen (15) angetrieben wird,
**dadurch gekennzeichnet, dass** der Druckbogen (15) zwei Teile (15', 15") umfasst, die einzeln verstellbar sind, und dass der Druckbogen (15) eine Druckminderungszone (32) umfasst, in der ein Stiel in das abgeschnittene Stück eingeführt wird.

2. Maschine nach Anspruch 1, **dadurch gekennzeichnet, dass** jeder Teil des Druckbogens (15', 15") an jeweils einem Arm (24, 25) angebracht ist.

3. Maschine nach Anspruch 2, **dadurch gekennzeichnet, dass** mindestens ein Arm, vorzugsweise beide Arme (24, 25), um jeweils eine Drehmitte (25, 27) schwenkbar sind.

4. Maschine nach Anspruch 2 oder 3, **dadurch gekennzeichnet, dass** mindestens ein Teil des Druckbogens (15', 15") zum Formring (6) hin vorgespannt ist.

5. Maschine nach einem der vorhergehenden Ansprüche, **dadurch gekennzeichnet, dass** der Druckbogen (15) selbstjustierend ist.

6. Maschine nach einem der vorhergehenden Ansprüche, **dadurch gekennzeichnet, dass** sie einen stationären äußeren Ring (34) umfasst.

7. Maschine nach Anspruch 6, **dadurch gekennzeichnet, dass** der äußere Ring eine Druckzone (35) umfasst, während mindestens in dieser Druckzone (35) Walzen (33) angeordnet sind.

8. Maschine nach einem der vorhergehenden Ansprüche, **dadurch gekennzeichnet, dass** der äußere Drückstempel (8) an einem Deckel (21) angebracht ist.

9. Maschine nach Anspruch 8, **dadurch gekennzeichnet, dass** der Deckel (21) während der Drehung des Formrings (6) entlang den Walzen (33) nach oben rollt.

10. Maschine nach Ansprüchen 6 - 9, **dadurch gekennzeichnet, dass** der äußere Ring ferner eine Öffnungszone (36) umfasst, die den Deckel (21) öffnet, während die Öffnungszone ein dreidimensional gestalteter Bogen ist, der ein gefrästes Metallstück ist.

## Revendications

1. Machine de production de confiserie à partir d'une masse (2) de barre de sucre ou de matière similaire, comprenant :
- une matrice annulaire rotative (6) ayant un axe de rotation et un certain nombre de chambres de pressage (11) espacées circonférentiellement, s'étendant radialement,
- un moyen d'alimentation (4, 5) pour alimenter une barre (2) dans les chambres de pressage (11),
- un moyen de cisaillement (7, 10) au niveau de chaque chambre de pressage (11) pour sectionner des morceaux (1) de la barre de matière,
- une paire de poinçons interne et externe (9, 8) par chambre de pressage pour presser le morceau à la forme souhaitée, au moins le poinçon interne (9) pouvant être déplacé au cours du pressage et le poinçon interne (9) étant entraîné par une courbe de pression (15), **caractérisé en ce que** la courbe de pression (15) comprend deux parties (15', 15"), qui peuvent être ajustées individuellement et **en ce que** la courbe (15) comprend une zone de réduction de pression (32), dans laquelle un bâton est inséré dans le morceau sectionné.

2. Machine selon la revendication 1, **caractérisée en ce que** chaque partie de la courbe de pression (15', 15") est attachée à un bras (24, 25), respectivement.

3. Machine selon la revendication 2, **caractérisée en ce qu'**au moins un bras, de préférence les deux bras (24, 25), peuvent pivoter autour d'un centre de rotation (25, 27), respectivement.

4. Machine selon l'une quelconque des revendications 2 à 3, **caractérisée en ce qu'**au moins une partie de la courbe de pression (15', 15") est précontrainte vers la matrice annulaire (6).

5. Machine selon l'une quelconque des revendications précédentes, **caractérisée en ce que** la courbe de pression (15) est auto-ajustable.

6. Machine selon l'une quelconque des revendications précédentes, **caractérisée en ce qu'**elle comprend une bague externe stationnaire (34).

7. Machine selon la revendication 6, **caractérisée en ce que** la bague externe comprend une zone de pression (35), des rouleaux (33) étant disposés au moins dans cette zone de pression (35).

8. Machine selon l'une quelconque des revendications précédentes, **caractérisée en ce que** le poinçon externe (8) est attaché à un couvercle (21).

9. Machine selon la revendication 8, **caractérisée en ce que** le couvercle (21) roule le long des rouleaux (33) au cours de la rotation de la matrice annulaire (6).

10. Machine selon l'une quelconque des revendications 6 à 9, **caractérisée en ce que** la bague externe comprend en outre une zone d'ouverture (36), qui ouvre le couvercle (21), la zone d'ouverture étant une courbe de forme tridimensionnelle qui est un morceau de métal fraisé.
